# EUROPEAN PATENT SPECIFICATION

(11) **EP 0 417 419 B1**
(45) Date of publication and mention of the grant of the patent: **09.11.1994**
(21) Application number: 90112968.4
(22) Date of filing: 06.07.1990
(51) Int. Cl.: B62J 9/00

(54) **Mounting device for bicycle accessories**
Befestigungseinrichtung für Fahrradzubehör
Dispositif de fixation pour les accessoires de vélo

(30) Priority: 12.09.1989 US 406430
(43) Date of publication of application: 20.03.1991
(73) Proprietor: CANNONDALE CORPORATION, Georgetown, Connecticut 06829 (US)
(72) Inventor: Chan, Don Hei Wai, New Fairfield, Connecticut 06812 (US)
(74) Representative: Goetz, Rupert, Dipl.-Ing.

(56) References cited:
- CH-A- 234 492
- DE-A- 2 846 347
- US-A- 4 566 617

## Description

### Field of the Invention

The present invention relates to an accessory attaching device according to the preamble of claim 1.

### Background of the Invention

A wide variety of accessories are used by bicyclists to carry things they want to have with them during their rides. For example, bicyclists who ride long distances for recreation, touring, or racing carry one or more water bottles. Nearly all bicyclists equip their bikes with a saddle bag for carrying small articles, such as a wallet, money, keys, tools, a spare tire inner tube, an extra water bottle and food. For recreational bicycling and touring there are carrier bags that fit on the top of front or rear carrier racks.

Nearly all carrier bags for bicycle saddles that are currently on the market are attached by two hook and loop cloth (Velcro®) straps that are wrapped around the two frame bars of the saddle and a third hook and loop cloth strap that is wrapped around the saddle post. Similarly, hook and loop cloth straps wrapped around the side rails of the platforms of carrier racks constitute the most common way of attaching carrier bags on the tops of rack platforms. These widely used hook and loop cloth attachment systems, though quite satisfactory, are a little tedious to use. The user has to form each loop around the frame bar or side rail and press it home. With saddle bags the user must hold the bag with one hand and complete the two side loop attachments with the other hand in a relatively small space up under the saddle. Also, the tenacity of the hook and loop cloth diminishes as the material wears with normal use.

A device as set out in the preamble of claim 1 is known from DE-A-2 846 347 wherein it is disclosed to use two part clamps joined by one or more screws to parts of the bicycle to attach accessories, such as bags or boxes to bicycle members. In order to install such clamps, the screw must be loosened to enable the clamp to be positioned on the bicycle members and then tightened to hold it in place. Though the task of loosening and tightening the screw is not difficult, it is time-consuming and is a nuisance when the user wants to remove and reattach the accessory frequently. CH-A-234,492 describes a similar device.

### Summary of the Invention

An object of the present invention is to provide a device for attaching a bicycle accessory to a bicycle in a manner that is very simple to use, provides a very secure attachment and is highly durable.

The object is acheived with an accessory-attaching device as set out in claim 1. The device makes use of two spaced-apart members that are found in virtually all bicycles. Such members include the frame bars of saddles and the platform rails of carrier racks.

When the members defining the opening have opposite sides forming a plane, then the surfaces of the support member that engage the members are preferably also planar, whereby rotation of the cleat member and support member can occur without cocking or strain. Each leg portion of the cleat member may have a camming surface that diverges from the support member and is arranged to engage a respective member upon rotation from alignment with the major dimension to alignment with the minor dimension and to guide the cleat member and support member into clamping engagements with the bicycle members upon such rotation.

The cleat member and support member are preferably joined by a single screw that passes through a hole in the support member and is threaded into the cleat member and at least one locating pin on the cleat member that extends into a hole in the support member to prevent rotation of the cleat member relative to the support member.

For a better understanding of the invention, reference may be made to the following description of an exemplary embodiment, taken in conjunction with the accompanying drawings.

### Description of the Drawings

Fig. 1 is a front three-quarter pictorial view of the embodiment;
Fig. 2 is a front elevational view of the embodiment;
Fig. 3 is a bottom plan view of a cleat member;
Fig. 4 is a bottom plan view of a support member; and
Fig. 5 is a side elevational view of the support member.

### Description of the Embodiment

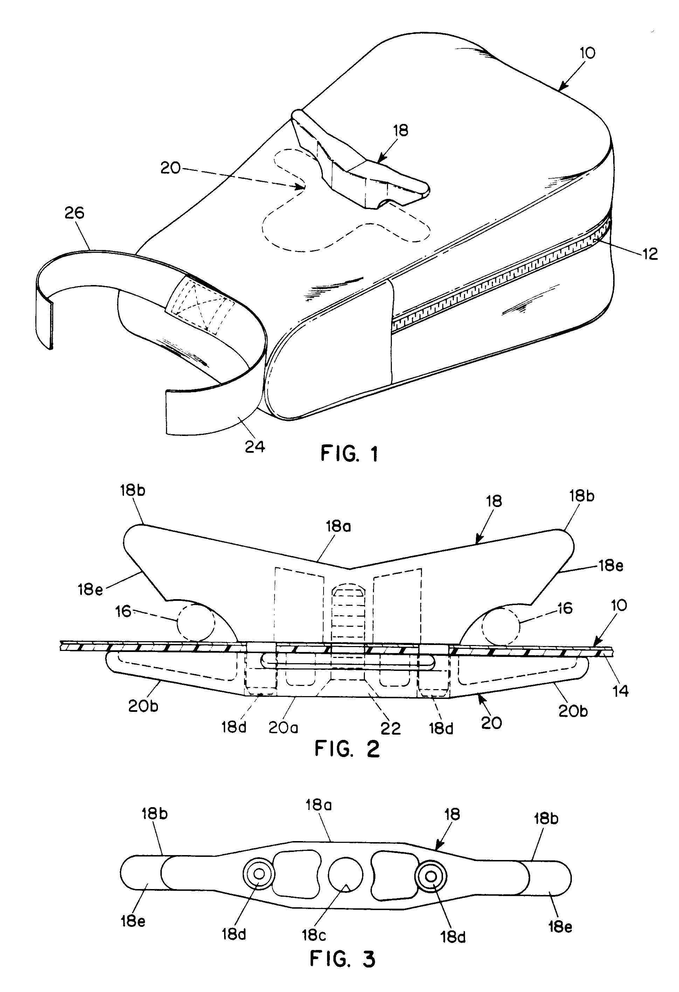

The embodiment shown in the drawings is integrated into a bicycle saddle bag 10, which is known per se. The bag 10 is made of a durable fabric and is of a generally wedge shape. A zipper 12 extends partway along each side and across the back. The bag is shaped by a moderately stiff liner 14 (Fig. 2) of a plastic foam sheet that is bent into a "U" and extends continuously along the bottom, front and top walls within the bag and is shaped in plan to conform to the borders of those walls.

The bag 10 is attached to the two parallel metal side frame bars 16 (Fig. 2) of a bicycle saddle by the device of the present invention, which includes a cleat member 18 and a support member 20. The frame bars 16 are spaced apart laterally from each other by a dimension ("minor dimension") that is less than the spacing along a line oblique to the lateral dimension ("major dimension"). Putting it another way, the saddle frame bars 16 define an opening between them having a minor dimension and a major dimension that is substantially larger than the minor dimension and lies oblique to the minor dimension, that is, extends diagonally at a selected angle. The cleat member 18 and support member each have a medial portion 18a, 20a that spans the minor dimension of the opening and a leg portion 18b, 20b that extends out from each of the opposite ends of the medial portion for engagement with opposite sides (in this case, the top and bottom sides) of the saddle frame bars 16. The overall dimension between the outer ends of the leg portions 18b of the cleat member 18 is less than the major dimension of the opening formed by the frame bars 16 so that the cleat member 18 can be inserted between the frame bars from below and at an angle to its installed position and then rotated to align it with the minor dimension and engage the leg portions 18b, 20b with the seat frame bars 16. The medial portion 18a of the cleat member protrudes down between the frame bars, abuts the medial portion 20a of the support member and spans the space between the frame bars in the installed position (Fig. 2), thereby to keep the assembly (cleat, support and bag) from sliding from side to side and to define outwardly open slots in which the frame bars 16 are captured.

The cleat member 18 and support member 20 are fastened together and to the bag 10 by a screw 22 that passes through a hole 20c in the support member 20 and threads into a hole 18c in the cleat member 18 and by pins 18d that project from the cleat member into holes 20d in the support member, which, of course, keep the bag 10, cleat member 18 and support member 20 from rotating relative to each other.

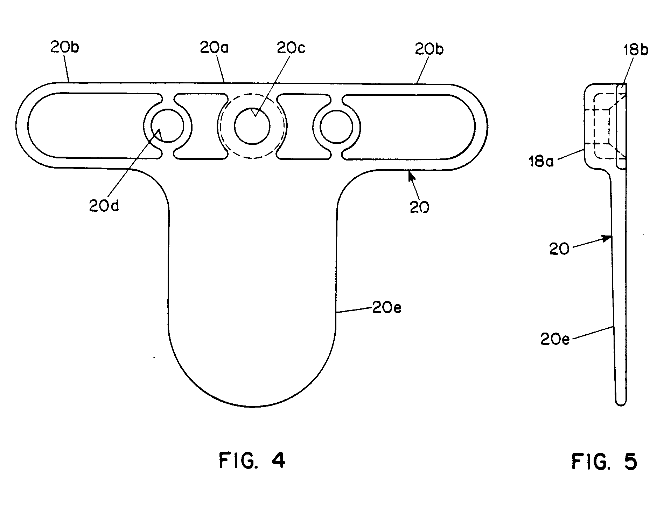

The cleat member and support member are preferably molded from a rigid polymeric material. To save material and keep the weight low, the surfaces that face each other and the interior of the bag have recesses (see Figs. 2 to 5). The support member has a plate portion 20e that stabilizes the connection of the bag 20 to the cleat member and support member against rocking in the front-to-rear direction.

To facilitate installing the bag on the saddle frame bars, each leg portion 18b of the cleat member 18 has a cam surface 18e that diverges obliquely away from the bag wall and from the longitudinal axis of the bag. If the user does not begin installation by pushing the bag up against the frame bars 16, the rotation of the bag (and the attachment device) will bring the cam surfaces 18e into engagement with the bars, and the cam surfaces will draw the bag up against the bars and help guide the bars into the receiving spaces between the leg portions 18b, 20b of the cleat member and support member.

In the embodiment, the attachment device further includes a hook cloth strap 24 and a loop cloth strap 26 stitched to the front end of the bag. These straps are taken along either side of the saddle post and joined in front of the post. The straps keep the bag from rotating or translating relative to the saddle frame.

The invention has been described above and shown in the drawings as applied to a saddle bag accessory. The invention is also applicable to carrier bags that rest on top of the platform of front and rear carrier racks. The cleat members can extend down from the undersides of the bags and engage spaced-apart elements of the platform, such as the side rails. A strap or latch can provide the third attachment point against rotation and longitudinal displacement. Another application of the present invention is in a water bottle holder for attachment under the saddle. The support member can be attached to or form part of a cage for a spare water bottle. The invention is also useful in special brackets and holders for tools, spare tire tubes, or other articles, again by designing the support member appropriately for the special use. In water bottle holders and other special holders, the cleat member and support member can be molded in one piece.

A common characteristic of the uses of the invention is that the elements of the bicycle forming the opening that receives the cleat member have surfaces that are engaged in the spaces formed by the leg portions of the cleat member and support member that may be substantially planar, so that the attachment device can be inserted into the opening in one orientation and rotated in a plane to the attached position. Also, if the accessory is not stably supported by such elements, the leg portions of the support member may be made wide enough to impart stability by forming stabilizing plate-like portions. The third attachment point of the device may be associated directly with the support member, such as a strap or a latch affixed to a plate-like part of the support member spaced apart from the leg portions, or indirectly as part of the accessory being attached to the bicycle, as in the case of the straps 24 and 26 in the embodiment, or as a strap or latch attached to the bicycle.

## Claims

1. An accessory attaching device adapted to be attached to spaced apart first and second members (16) of a bicycle, which members define an opening between them having a minor dimension and a major dimension, the device having a support member (20) that is dimensioned to span the minor dimension of the opening and to engage both members (16) on one side thereof and a cleat member (18) that has a medial portion (18a) that is arranged to be positioned in the opening between the members (16) and is dimensioned to span the minor dimension of the opening and a leg portion (18b) extending out from each of the opposite ends of the medial portion (18a) for engagement with both of the members (16) on the opposite sides thereof, characterized in that the support member (20) and cleat member (18) are permanently and non-rotatably connected together, and in that the overall dimension between the outer ends of the leg portions (18b) of the cleat member (18) is less than the major dimension of the opening so that the cleat member (18) is insertable through the opening in a first position in which the cleat member is aligned with the major dimension of the opening and rotatable to a second position in which the cleat member is aligned with the minor dimension of the opening to engage the leg portions (18b) with the bicycle members (16), and in that the support member (20) and the leg portions (18b) of the cleat member define spaces between them on either side of the medial portion (18a) of the cleat member that are shaped and dimensioned to enable the members (16) to be received slidably in the spaces upon rotating the device to align the cleat member (18) with the minor dimension of the opening between the members (16), and in that there is a means (24, 26) for releasably connecting the accessory or the support member (20) to a third member of the bicycle to prevent the cleat member (18) and support member (20) from rotating or translating relative to the first and second members (16).

2. A device according to claim 1 and further characterized in that the portions (20b) of the support member (20) that engage the elements (16) are planar, whereby rotation of the cleat member (18) and support member (20) is facilitated.

3. A device according to claim 1 wherein each leg portion (18b) of the cleat member (18) has a camming surface (18e) that diverges from the support member and is arranged to engage a respective member (16) upon rotating of the cleat member from the first position to the second position and to guide the support member (20) and the leg portions (18b) of the cleat member (18) into engagement with the members (16) upon such rotation.

4. A device according to claim 1 and further characterized in that the cleat member (18) is connected to the support member by a single screw (22) that passes through a hole (20c) in the support member (20) and is threaded into the cleat member (18) and in that at least one locating pin (18d) on the cleat member (18) extends into a hole (20d) in the support member (20) to prevent rotation of the cleat member (18) relative to the support member (20).

5. A device according to claim 1 and further characterized in that the support member (20) is formed as a holder for the accessory (10).

6. A device according to claim 5 and further characterized in that the means for fastening the support member (20) to the third element is a strap (24, 26) joined to the accessory (10).

7. A device according to claim 5 and further characterized in that the accessory is a carrier bag (10) and the support member (20) includes a plate-like portion (20e) engaging a portion of a wall of the bag (10) and in that said wall of the bag (10) is engaged between the cleat member (18) and the support member (20).

## Patentansprüche

1. Zubehör-Befestigunsvorrichtung, geignet zur Befestigung an auseinander stehenden ersten und zweiten Elementen (16) eines Fahrrades, welche Elemente eine zwischen ihnen liegende Öffnung mit kleinerer Strecke und größerer Strecke begrenzen, wobei die Vorrichtung ein Stützteil (20), das so dimensioniert ist, daß es die kleinere Strecke der Öffnung überspannen kann und beide Elemente (16) auf einer Seite derselben verbinden kann, und ein Querteil (18) besitzt, das einen Mittelabschnitt (18a) aufweist, der so ausgestaltet ist, daß er in die Öffnung zwischen den Elementen (16) positioniert werden kann, und so dimensioniert ist, daß er die kleinere Strecke der Öffnung und ein Sockelabschnitt (18b), der sich von jedem der gegenüberliegenene Enden des Mittelabschnitts (18a) nach außen hin erstreckt, zur Verbindung mit beiden Elementen (16) auf den gegenüberliegenden Seiten davon überspannt, **dadurch charakterisiert**, daß das Stützteil (20) und das Querteil (18) dauerhaft und nicht-rotierbar miteinander verbunden sind, und daß die Gesamtstecke zwischen den äußeren Enden der Sockelabschnitte (18b) des Querteils (18) geringer als die größere Strecke der Öffnung ist, so daß das Querteil (18) durch die Öffnung in einer ersten Position einführbar ist, in der das Querteil zur größeren Strecke der Öffnung ausgerichtet wird und zu einer zweiten Position rotierbar ist, in der das Querteil zur kleineren Stecke der Öffnung ausgerichtet ist, um die Sockelabschnitte (18b) mit den Fahrradelementen (16) zu verbinden, und daß das Stützteil (20) und die Sockelabschnitte (18b) des Querteils Räume zwischen beiden Seiten des Mittelabschnittes (18a) des Querteils begrenzen, die so geformt und dimensioniert sind, daß die Elemente (16) gleitend in die Räume durch Rotieren der Vorrichtung eingeführt werden können, um das Quereil (18) mit der kleineren Strecke der Öffnung zwischen den Elementen (16) auszurichten, und daß Vorrichtungn (24, 26) vorliegen, um das Zubehör oder das Stützteil (20) abnehmbar an ein drittes Element des Fahrrades zu befestigen, damit verhindert wird, daß das Querteil (18) und das Stützteil (20) in Bezug zum ersten und zweiten Element (16) rotieren oder sich versetzen.

2. Vorrichtung gemäß Anspruch 1, weiter **dadurch gekennzeichnet**, daß die Abschnitte (20b) des Stützteils (20), die Elemente (16) verbindend, planar sind, wodurch die Rotation des Querteils (18) und des Stützteils (20) erleichtert wird.

3. Vorrichtung gemäß Anspruch 1, worin jeder Sockelabschnitt (18b) des Querteils (18) eine gekrümmte Oberfläche (18e) besitzt, die von dem Stützteil weggeht und so ausgestaltet ist, daß sie ein jeweiliges Element (16) durch Rotation des Querteils ausgehend von der ersten Position zu der zweiten Position in Verbindung bringt, und den Stützteil (20) und die Sockelabschnitte (18b) des Querteils (18) durch Rotation mit den Elementen (16) in Verbindung bringt.

4. Vorrichtung gemäß Anspruch 1, ferner **dadurch charakterisiert**, daß der Querteil (18) durch eine einzelne Schraube (22) am Stützteil befestigt ist, die durch ein Loch (20c) im Stützteil (20) geschoben wird und durch das Querteil (18) geführt wird, und daß mindestens ein Feststellstift (18d) am Querteil (18) sich in ein Loch im Stutzteil (20) erstreckt, um ein Rotieren des Querteils (18) in bezug auf den Stutzteil (20) zu verhindern.

5. Vorrichtung gemaß Anspruch 1, weiter **dadurch charakterisiert,** daß der Stützteil (20) als eine Halterung für das Zubehör (10) gebildet ist.

6. Vorrichtung gemäß Anspruch 5, weiter **dadurch charakterisiert**, daß die Vorrichtung zur Befestigung des Stützteils (20) an das dritte Element ein mit dem Zubehör (10) verbundener Riemen (24, 26) ist.

7. Vorrichtung gemäß Anspruch 5, weiter **dadurch charakterisiert**, daß das Zubehöhr eine Tragetasche (10) ist und das Stützteil (20) einen Platten-ähnlichen Abschnitt (20e) einschließt, der mit einem Abschnitt einer Wand der Tasche (10) in Verbindung steht, und daß die besagte Wand der Tasche (10) zwischen dem Querteil (18) und dem Stützteil (20) eingebunden ist.

## Revendications

1. Dispositif de fixation d'accessoires conçu pour être fixé à des premier et second éléments (16) distants l'un de l'autre d'une bicyclette, lesquels éléments définissent entre eux une ouverture ayant une petite dimension et une grande dimension, le dispositif ayant un élément formant support (20) qui est dimensionné pour s'étendre sur la petite dimension de l'ouverture et pour être en contact avec les deux éléments (16) sur un côté de ceux-ci et un élément formant taquet (18) qui a une partie médiane (18a) qui est agencée pour être positionnée dans l'ouverture entre les éléments (16) et qui est dimensionnée pour s'étendre sur la petite dimension de l'ouverture et une partie formant branche (18b) qui s'étend depuis chacune des extrémités opposées de la partie médiane (18a) pour venir en contact avec les deux éléments (16) sur leurs côtés opposés, caractérisé en ce que l'élément formant support (20) et l'élément formant taquet (18) sont reliés entre eux en permanence et de manière non rotative, et en ce que la dimension totale entre les extrémités externes des parties formant branches (18b) de l'élément formant taquet (18) est inférieure à la grande dimension de l'ouverture de sorte que l'élément formant taquet (18) est insérable par l'ouverture dans une première position dans laquelle l'élément formant taquet est aligné avec la grande dimension de l'ouverture et peut tourner dans une seconde position dans laquelle l'élément formant taquet est aligné avec la petite dimension de l'ouverture pour faire entrer en contact les parties formant branches (18b) avec les éléments de bicyclette (16), et en ce que l'élément formant support (20) et les parties formant branches (18b) de l'élément formant taquet définissent entre eux de chaque côté de la partie médiane (18a) de l'élément formant taquet des espaces qui sont de forme et de dimension permettant aux éléments (16) d'être reçus à coulissement dans les espaces lors d'une rotation du dispositif pour aligner l'élément formant taquet (18) avec la petite dimension de l'ouverture entre les éléments (16), et en ce qu'il existe un dispositif (24, 26) pour relier de manière amovible l'accessoire ou l'élément formant support (20) à un troisième élément de la bicyclette pour empêcher l'élément formant taquet (18) et l'élément formant support (20) de tourner ou de décrire une translation par rapport aux premier et second éléments (16).

2. Dispositif selon la revendication 1, caractérisé en outre en ce que les parties (20b) de l'élément formant support (20) qui viennent en contact avec les éléments (16) sont planes de sorte que la rotation de l'élément formant taquet (18) et de l'élément formant support (20) est facilitée.

3. Dispositif selon la revendication 1, dans lequel chaque partie formant branche (18b) de l'élément formant taquet (18) a une surface en saillie (18e) qui diverge de l'élément formant support et est agencée pour venir en contact avec un élément (16) respectif lors d'une rotation de l'élément formant taquet de la première position dans la seconde position et pour guider l'élément formant support (20) et les parties formant branches (18b) de l'élément formant taquet (18) en contact avec les éléments (16) lors d'une telle rotation.

4. Dispositif selon la revendication 1, caractérisé en outre en ce que l'élément formant taquet (18) est relié à l'élément formant support par une seule vis (22) qui passe par un trou (20c) dans l'élément formant support (20) et qui est vissée dans l'élément formant taquet (18) et en ce qu'un goujon d'assemblage (18d) au moins sur l'élément formant taquet (18) s'étend dans un trou (20d) dans l'élément formant support (20) pour empêcher une rotation de l'élément formant taquet (18) par rapport à l'élément formant support (20).

5. Dispositif selon la revendication 1, caractérisé en outre en ce que l'élément formant support (20) est sous forme de support pour l'accessoire (10).

6. Dispositif selon la revendication 5, caractérisé en outre en ce que le dispositif pour fixer l'élément formant support (20) au troisième élément est une sangle (24, 26) reliée à l'accessoire (10).

7. Dispositif selon la revendication 5, caractérisé en outre en ce que l'accessoire est un sac (10) et l'élément formant support (20) comprend une partie analogue à une plaque (20e) qui est en contact avec une partie d'une paroi du sac (10) et en ce que ladite paroi du sac (10) est placée entre l'élément formant taquet (18) et l'élément formant support (20).
